Europäisches Patentamt

European Patent Office

Office européen des brevets

(19)

(11) Numéro de publication: **0 278 824**
**B1**

(12) # FASCICULE DE BREVET EUROPEEN

(45) Date de publication du fascicule du brevet:
**17.10.90**

(51) Int. Cl.⁵: **F16F 13/00**

(21) Numéro de dépôt: **88400143.9**

(22) Date de dépôt: **22.01.88**

(54) Perfectionnements apportés aux supports antivibratoires hydrauliques.

(30) Priorité: **26.01.87 FR 8700859**

(43) Date de publication de la demande:
**17.08.88 Bulletin 88/33**

(45) Mention de la délivrance du brevet:
**17.10.90 Bulletin 90/42**

(84) Etats contractants désignés:
**DE FR GB IT**

(56) Documents cités:
**EP-A- 0 155 646**
**EP-A- 0 216 082**
**DE-A- 3 508 823**
**DE-B- 1 084 528**
**FR-A- 2 542 834**
**FR-A- 2 574 031**
**GB-A- 2 191 561**

**PATENT ABSTRACTS OF JAPAN,**
**vol. 10, no. 375 (M-545)[2432], 13 décembre 1986; &**
**JP-A-61 167 732 (TOYODA GOSEI CO. LTD) 29-07-1986**

(73) Titulaire: **HUTCHINSON, 2 rue Balzac, F-75008 Paris(FR)**

(72) Inventeur: **Bellamy, Alain, 2, Impasse de Lubidet,**
**F-41100 Vendome(FR)**
Inventeur: **Bouhours, Jean-Paul, 15, rue du Mûrier,**
**F-28290 Arrou(FR)**

(74) Mandataire: **Behaghel, Pierre et al, CABINET**
**PLASSERAUD 84 rue d'Amsterdam, F-75009 Paris(FR)**

## Description

L'invention est relative aux dispositifs antivibratoires destinés à être interposés aux fins de support et d'amortissement entre deux éléments rigides individuellement soumis à certaines oscillations ou vibrations, l'amortissement faisant intervenir au moins dans certaines conditions de fonctionnement le refoulement d'un liquide à travers un passage étranglé.

A titre d'exemple non limitatif, on indique que de tels supports peuvent être montés entre un châssis de véhicule et le moteur à combustion interne de ce véhicule en vue d'amortir aussi bien les oscillations imposées au châssis par les irrégularités du sol lors de la circulation du véhicule sur ce sol que les vibrations dues au fonctionnement du moteur.

L'invention concerne plus particulièrement, parmi les supports du genre en question, ceux qui sont constitués par un boîtier étanche interposé entre les deux éléments rigides, boîtier comportant une embase rigide solidarisable avec l'un des deux éléments rigides, un anneau rigide d'axe X solidarisable avec l'autre élément rigide, une paroi élastique annulaire de support, de préférence d'allure tronconique, reliant de manière étanche l'embase à l'anneau et une membrane flexible raccordée de manière étanche à l'anneau, l'intérieur de ce boitier étant divisé, par une cloison rigide raccordée à l'anneau entre la paroi annulaire et la membrane, en deux chambres, à savoir une chambre de travail du côté de la paroi annulaire et une chambre de compensation du côté de la membrane, ces deux chambres communiquant entre elles en permanence par le passage étranglé ci-dessus, et une masse liquide remplissant les deux chambres ainsi que le passage étranglé.

Avec un tel support, les oscillations ou vibrations crées entre les deux éléments rigides ont pour effet de rapprocher et d'écarter axialement à tour de rôle ces deux éléments l'un de l'autre.

Ces oscillations ont pour effet de refouler le liquide de l'une des deux chambres dans l'autre à travers le passage étranglé et inversement et, pour une valeur donnée $F_0$ de la fréquence d'alternance de ces refoulements, valeur dépendant essentiellement des cotes dudit passage, on observe une résonance de la masse de liquide ou "colonne" circulant dans ce passage, ce qui entraîne une réduction des transferts à cette fréquence en diminuant l'intensité acoustique correspondante.

L'invention vise plus particulièrement encore le cas où les supports du genre en question comprennent des moyens pour régler la section dudit passage, et donc la valeur $F_0$.

Un certain nombre de formules ont déjà été proposées pour assurer un tel réglage, mais elles mettent généralement en œuvre des moyens compliqués, ou facilement déréglables, ou encore agissant sur la section totale d'une fraction seulement de la longueur de la colonne ou sur une fraction seulement de la section de cette colonne, ce qui rend les réglages difficiles et imprécis.

C'est en particulier le cas pour les dispositifs antivibratoires décrits par le document FR-A 2 574 031, dans lesquels le passage étranglé traverse la cloison rigide intermédiaire parallèlement à l'axe X et comprend un tronçon médian de section réglable délimité latéralement en partie par une tranche latérale plane d'une palette plate montée pivotante autour de l'axe X.

L'invention perfectionne ces derniers dispositifs et permet d'assurer les réglages désirés avec précision sur la section totale de longueurs de colonne relativement importantes, et ce avec des moyens simples et robustes.

A cet effet les supports du genre en question selon l'invention sont essentiellement caractérisés en ce que leur cloison rigide intermédiaire se présente sous la forme d'un boîtier cylindrique d'axe X contenant la palette et comprenant une cloison radiale de butée de fin de course pour la susdite tranche plane de palette et en ce que le passage étranglé est délimité latéralement à ses deux extrémités par deux orifices évidés dans le boîtier et, pour son tronçon médian, par la susdite tranche plane de la palette, par la susdite cloison radiale et par la face cylindrique interne du boîtier.

Dans des modes de réalisation avantageux, on a recours en outre à l'une et/ou à l'autre des dispositions suivantes:

– le clapet présente la forme générale d'un secteur circulaire plat et épais dont l'étendue angulaire est de l'ordre de 180°,

– l'épaisseur L du clapet comptée selon la direction de l'axe X est au moins égale à 10 mm.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant au dessin ci-annexé d'une manière bien entendu non limitative.

La figure 1, de ce dessin, montre en coupe axiale selon I–I, figure 2, un support antivibratoire établi, selon l'invention.

La figure 2 montre en coupe transversale selon I–I, figure 1 les pièces centrales de ce support.

La figure 3 est un schéma explicatif relatif dudit support.

Le support considéré est destiné à être interposé verticalement ou selon une direction légèrement inclinée sur la verticale entre un organe porteur rigide constitué par un châssis de véhicule et un organe supporté rigide constitué par un moteur à combustion interne.

Les termes "haut, bas, supérieur, inférieur, cuvette", utilisés dans la description qui suit, le sont à titre d'exemple non limitatif car le support décrit peut parfaitement être utilisé à l'envers du sens adopté pour cette description.

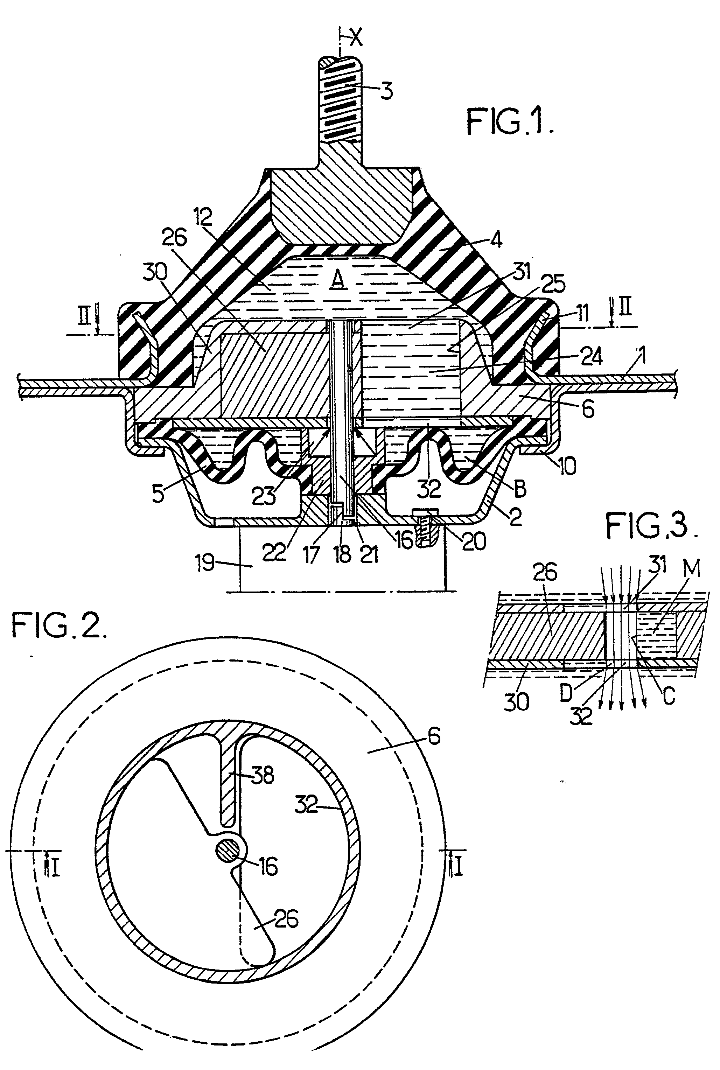

Le support représenté sur la figure 1 se présente sous la forme générale d'un boîtier étanche de révolution autour d'un axe X comportant:

– une plaque annulaire ou anneau rigide 1 prolongeant horizontalement vers l'extérieur le bord d'une cuvette métallique inférieure 2, anneau susceptible d'être fixé sur le châssis d'un véhicule à l'aide de systèmes boulons-écrous non représentés,

– un goujon supérieur 3 en attente dont la tige filetée, s'étendant vers le haut, sert à la fixation du moteur du véhicule,

– une paroi annulaire élastique 4 suffisamment épaisse pour transmettre les charges du moteur au châssis, paroi délimitée en substance par deux surfaces tronconiques évasées vers le bas et dont la petite base, disposée en haut, est adhérée contre la tête du goujon 3, sa grande base inférieure étant raccordée de façon étanche à l'anneau 1,

– et une membrane inférieure étanche et flexible 5 contenue à l'intérieur de la cuvette 2, le bord de cette membrane étant fixé de façon étanche sur l'anneau 1.

Une cloison métallique intermédiaire 6 divise l'intérieur du boîtier ainsi formé en deux chambres, savoir une chambre de travail supérieure A et une chambre de compensation ou d'équilibrage inférieure B.

Le pourtour de la cloison 6 est à cet effet racordé de façon étanche à l'anneau 1, entre la paroi épaisse 4 et la membrane 5.

L'anneau 1 est ici constitué par deux morceaux de tôle annulaires accolés et l'assemblage sur cet aneau 1 des bords respectifs de la cuvette 2, de la membrane 5 et de la cloison intermédiaire 6 est assuré par superposition de ces trois bords et par leur pincement ou sertissage à l'intérieur du bord 10 de l'un desdits morceaux de tôle refermé sur eux, le bord 11 de l'autre morceau étant rabattu vers le haut pour constituer une armature de renforcement de la paroi épaisse 4.

La cloison 6 est traversée par un passage étranglé reliant entre elles les deux chambres A et B et l'ensemble de ce passage et de ces chambres est rempli d'un liquide 12.

Dans le mode de réalisation des figures 1 à 3, passage étranglé est un canal cylindrique 24 d'axe parallèle à l'axe X et excentré par rapport à celui-ci.

Ledit canal 24 s'étend axialement à l'intérieur d'un boîtier cylindrique 30, d'axe X, solidaire de la cloison 6, depuis un premier orifice 31 évidé dans ce boîtier et débouchant dans la chambre A jusqu'à un second orifice 32 également évidé dans le boîtier et débouchant dans la chambre B.

Il est délimité latéralement d'une part par une portion de la face cylindrique interne 25 du boîtier 30, ce de révolution autour de l'axe X et d'autre part par la tranche latérale plane d'une palette plate et épaisse solidaire d'un arbre 16 monté pivotant dans le boîtier autour de l'axe X.

La palette 26 présente la forme générale d'un cteur circulaire d'axe X dont l'étendue angulaire est de préférence de l'ordre de 180° et dont le rayon est sensiblement égal à celui de la face 25.

La forme de chacun des orifices 31 et 32 est sensiblement identique à celle de la palette 26: la section du passage étranglé réservé entre ces deux orifices peut donc varier d'une valeur maximum pour laquelle l'espace compris entre les deux orifices est totalement dégagé par la palette à une valeur minimum, voire nulle, pour laquelle la palette occupe presque complètement ou complètement ledit espace.

L'épaisseur axiale L de la palette, qui correspond à la longueur du passage étranglé compris entre les deux chambres A et B, est relativement grande: cette épaisseur L est généralement supérieure ou égale à 10 mm et, si la section de chaque orifice 31 et 32 est égale à S, la valeur de l'épaisseur L, est généralement supérieure à $0,3 \sqrt{S}$ et de préférence à $0,5 \sqrt{S}$.

L'arbre 16 est accouplé en 17 à l'arbre de sortie 18 d'un moteur électrique 19.

Ce moteur 19 est disposé à l'extérieur du support, étant rapporté par vissage de vis 20 au-dessous de la cuvette 2.

L'ensemble des deux arbres rotatifs 16 et 18 mutuellement accouplés traverse jointement un trou 21 de la cuvette et un palier de guidage 22 fixé sur le fond de cette cuvette, à l'intérieur de celle-ci.

L'étanchéité entre ledit ensemble et le palier 22 est assurée par un joint 23.

Le centre de la membrane flexible 5 est traversé par le palier 22 et est adhéré de façon étanche contre celui-ci.

Enfin, on fait comprendre au boîtier 30 une cloison radiale plane 38 qui forme butée de fin de course angulaire pour la palette 26.

La présence de cette cloison 38 permet de matérialiser la face qui, avec la palette et la face 25, délimite la "colonne" à l'intérieur du boîtier.

Le fonctionnement du support décrit ci-dessus est le suivant.

Qand la palette 26 est en position angulaire pour laquelle elle obture les orifices 31 et 32, la communication entre les deux chambres A et B est interrompue et le support est relativement ferme.

Quand au contraire on désire filtrer certaines vibrations, il suffit de faire tourner la palette 26 à l'aide du moteur électrique 19 de façon telle que cette palette dégage au moins en partie les orifices 31 et 32.

Le degré de dégagement de ces orifices est réglé en fonction de la fréquence $F_0$ des vibrations dont on désire réduire le transfert au maximum.

En effet ce degré définit la section droite de la "colonne" de liquide susceptible de se déplacer et donc d'entrer en résonance à l'intérieur du passage étranglé.

Cette colonne C est formée par le volume de liquide contenu dans le cylindre dont les génératrices, ont parallèles à l'axe X et dont les directrices sont les deux ouvertures étranglées D dégagées par la palette 26 au niveau des deux orifices 31 et 32.

Il est à noter que, dans ces conditions, la longueur L de la colonne C de section réglable est relativement grande par rapport à sa section transversale S.

En suite de quoi, et quel que soit le mode de réalisation adopté, on dispose finalement d'un support antivibratoire dont la constitution, le fonctionnement et les avantages – notamment la possibilité qu'il offre, de comprendre une "colonne" de grande longueur relative et de section réglable sur toute sa longueur – résultent suffisament de ce qui précède.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notamment:
- celles où une portion de la chambre de travail A serait délimitée d'une façon connue en soi par une cloison mobile ou déformable susceptible de se déplacer ou déformer perpendiculairement à elle-même avec une amplitude limitée à une valeur faible, notamment de l'ordre de 0,5 mm, de façon à filtrer certaines vibrations de petite amplitude et de fréquence relativement élevée,
- et celles où au moins un autre passage étranglé de section constante serait prévu en parallèle sur le passage étranglé réglable ci-dessus, entre les deux chambres A et B, ce qui permettrait de conférer au support des propriétés d'amortissement ou de filtrage permanentes pour certaines oscillations ou vibrations de fréquence prédéterminée.

**Revendications**

1. Dispositif antivibratoire destiné à être interposé aux fins de support et d'amortissement entre deux éléments rigides, constitué par un boîtier étanche comportant une embase rigide (3) solidarisable avec l'un des deux éléments rigides, un anneau rigide (1) d'axe X solidarisable avec l'autre élément rigide, une paroi élastique annulaire de support (4) reliant de manière étanche l'embase à l'anneau et une membrane flexible (5) raccordée de manière étanche à l'anneau, l'intérieur de ce boîtier étant divisé, par une cloison rigide (6) raccordée à l'anneau entre la paroi annulaire et la membrane, en deux chambres, à savoir une chambre de travail (A) du côté de la paroi annulaire et une chambre de compensation (B) du côté de la membrane, ces deux chambres communiquant entre elles en permanence par un passage étranglé d'ouverture réglable, et une masse liquide (12) remplissant les deux chambres ainsi que le passage étranglé, le passage étranglé traversant la cloison rigide intermédiaire (6) parallèlement à l'axe X et comprenant un tronçon médian de section réglable délimité latéralement en partie par une tranche latérale plane d'une palette plate (26) montée pivotante autour de l'axe X, caractérisé en ce que la cloison rigide intermédiaire (6) se présente sous la forme d'un boîtier cylindrique (30) d'axe X contenant la palette (26) et comprenant une cloison radiale (38) de butée de fin de course pour la susdite tranche plane de palette et en ce que le passage étranglé est délimité latéralement à ses deux extrémités par deux orifices (31, 32) évidés dans le boîtier et, pour son tronçon médian, par la susdite tranche plane de la palette (26), par la susdite cloison radiale (38) et par la face cylindrique interne (25) du boîtier.

2. Support selon la revendication 1, caractérisé en ce que le clapet présente la forme générale d'un secteur circulaire plat et épais dont l'étendue angulaire est de l'ordre de 180°.

3. Support selon l'une quelconque des précédentes revendications, caractérisé en ce que l'épaisseur L du clapet (26) comptée selon la direction de l'axe X est au moins égale à 10 mm.

**Patentansprüche**

1. Hydraulisches Antischwingungslager, das zur Abstützung und zur Dämpfung zwischen zwei starren Elementen eingefügt ist und aus folgenden Teilen besteht: einem dichten Gehäuse mit einem starren Körper (3), das an einem der starren Elemente anbringbar ist, einem starren Ring (1) mit der Achse X, der an dem anderen starren Element anbringbar ist, einer elastischen ringförmigen Stützwandung (4), die das starre Verbindungsstück dicht mit dem Ring verbindet und einer biegsamen Membran (5), die dicht mit dem Ring verbunden ist, wobei der Innenraum des Gehäuses durch eine starre Trennwand (6), die zwischen der ringförmigen Stützwandung und der Membran mit dem Ring verbunden ist, in zwei Kammern unterteilt ist, nämlich eine Arbeitskammer (A) auf der Seite der ringförmigen Wandung und eine Kompensationskammer (B) auf der Seite der Membran, die beiden Kammern untereinander dauernd über einen verengten Durchgang mit regulierbarer Öffnung miteinander in Verbindung stehen und die beiden Kammern sowie die Durchgangsöffnung mit einem flüssigen Medium gefüllt sind, wobei ferner die verengte Durchgangsöffnung die starre Zwischentrennwand (6) parallel zur Achse X durchquert und einen mittleren Abschnitt mit regulierbarem Querschnitt aufweist, der seitlich teilweise durch eine ebene seitliche Fläche eines flachen Schiebers (26) begrenzt wird, der um die Achse X drehbar befestigt ist, dadurch gekennzeichnet, daß die starre Zwischentrennwand (6) die Form eines zylindrischen Gehäuses (30) mit der Achse X hat, das den Schieber (26) enthält und mit einer radialen Trennwand (38) versehen ist, die den Endanschlag für den Weg der ebenen Fläche des Schiebers bildet und daß die verengte Durchgangsöffnung seitlich an ihren beiden Endabschnitten durch zwei Öffnungen (31, 32), die in dem Gehäuse angebracht sind und in ihrem mittleren Abschnitt durch die ebene Fläche des Schiebers (26), die radiale Trennwand (38) und die innere zylindrische Fläche (25) des Gehäuses begrenzt ist.

2. Hydraulisches Antischwingungslager nach Anspruch 1, dadurch gekennzeichnet, daß der Schieber die allgemeine Form eines flachen und dicken Kreisabschnittes hat, dessen Winkelerstreckung etwa 180° beträgt.

3. Hydraulisches Antischwingungslager nach einem der vorhergehenden Ansprüche, dadurch gekennzeichnet, daß die Dicke L des Schiebers (26) in Richtung der Achse X wenigstens 10 mm beträgt.

**Claims**

1. Antivibratory device for insertion for support and shock absorbing purposes between two rigid elements, formed by a sealed case having a rigid base (3) which may be fixed to one of the two rigid elements, a rigid ring (1) having an axis X, securable to the other rigid element, a resilient annular support wall (4) sealingly connecting the base to the ring and a flexible membrane (5) sealingly joined to the ring, the inside of this case being divided, by a rigid wall (6) connected to the ring between the annular wall and the membrane, into two chambers, namely a work chamber (A) on the annular wall side and a compensation chamber (B) on the membrane side, these two chambers communicating together permanently through a restricted passage with adjustable aperture, and a liquid mass (12) filling the two chambers as well as the restricted passage, the restricted passage passing through the intermediate rigid wall (6) in a parallel direction to axis X and comprising a middle part with adjustable section which is partly laterally defined by a side plane edge of a flat vane (26) pivotingly mounted about axis X, characterized in that the intermediate rigid wall (6) is a cylindrical case (30) having the axis X, containing the vane (26) and comprising a radial wall (38) forming an end of travel stop for the plane edge of the vane and in that the restricted passage is laterally defined, at its both ends, by two orifices (31, 32) hollowed in the case and, for its middle part, by the plane edge of the vane (26), by the radial wall (38) and by the inner cylindrical face (25) of the case.

2. Support according to claim 1, characterized in that the vane or valve has the form of a circular flat and thick sector the angular extent of which is of the order of 180°.

3. Support according to any one of the preceding claims, characterized in that the thickness L of the valve (26), reckoned in the direction of axis X, is at least equal to 10 mm.

FIG.1.

FIG.2.

FIG.3.